(19) Europäisches Patentamt
European Patent Office
Office européen des brevets

(11) **EP 4 134 459 B1**

(12) **EUROPEAN PATENT SPECIFICATION**

(45) Date of publication and mention
of the grant of the patent:
**06.11.2024 Bulletin 2024/45**

(51) International Patent Classification (IPC):
**C22C 19/05** (2006.01)    **C22C 1/04** (2023.01)
**B29C 64/153** (2017.01)

(21) Application number: **21825515.6**

(22) Date of filing: **18.06.2021**

(52) Cooperative Patent Classification (CPC):
(C-Sets available)
**B22F 10/28; B22F 5/04; B22F 10/36; B22F 10/366;
B22F 10/64; B33Y 10/00; B33Y 40/20; B33Y 50/02;
B33Y 70/00; B33Y 80/00; C22C 1/0433;
C22C 19/055;** B22F 1/05; B22F 2998/10;
B22F 2999/00;                                    (Cont.)

(86) International application number:
**PCT/CN2021/100852**

(87) International publication number:
**WO 2021/254480 (23.12.2021 Gazette 2021/51)**

(54) **NICKEL-BASED SUPERALLOY AND MANUFACTURING METHOD THEREFOR, AND COMPONENT AND APPLICATION**

NICKELBASIERTE SUPERLEGIERUNG UND HERSTELLUNGSVERFAHREN DAFÜR SOWIE KOMPONENTE UND ANWENDUNG

SUPERALLIAGE À BASE DE NICKEL ET PROCÉDÉ DE FABRICATION S'Y RAPPORTANT ET COMPOSANT ET APPLICATION DE CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.06.2020 CN 202010571208**

(43) Date of publication of application:
**15.02.2023 Bulletin 2023/07**

(73) Proprietor: **Gaona Aero Material Co., Ltd.
Haidian
Beijing 100081 (CN)**

(72) Inventors:
• **ZHANG, Shaoming
Beijing 100081 (CN)**
• **BI, Zhongnan
Beijing 100081 (CN)**
• **XIA, Tian
Beijing 100081 (CN)**
• **WANG, Rui
Beijing 100081 (CN)**
• **QU, Jinglong
Beijing 100081 (CN)**
• **MA, Huiping
Beijing 100081 (CN)**
• **HAN, Shoubo
Beijing 100081 (CN)**
• **SUN, Guangbao
Beijing 100081 (CN)**

(74) Representative: **Ponti & Partners, S.L.P
Edifici PRISMA
Av. Diagonal núm. 611-613, Planta 2
08028 Barcelona (ES)**

(56) References cited:
EP-A1- 3 269 472      CN-A- 103 173 658
CN-A- 107 617 742     CN-A- 108 315 599
CN-A- 108 384 992     CN-A- 108 796 308
CN-A- 110 747 377     CN-A- 111 074 101
US-A- 5 078 963       US-A1- 2007 020 137

• ANONYMOUS: "Super Alloy HAYNES(r) 230 (UNS N06230)", INTERNET CITATION, 25 November 2012 (2012-11-25), pages 1 - 4, XP002765966, Retrieved from the Internet <URL:http://www.azom.com/article.aspx?Article ID=7789>

(52) Cooperative Patent Classification (CPC): (Cont.)
Y02P 10/25

C-Sets
B22F 2998/10, B22F 10/28, B22F 3/15;
B22F 2999/00, B22F 10/64, B22F 3/15

## Description

### Technical Field

The present disclosure relates to the technical field of alloys, and particularly, to a nickel-based superalloy and a manufacturing method therefor, and a component and an application.

### Background Art

Superalloys have good oxidation resistance and corrosion resistance, as well as high strength at high temperatures, and are thus critical materials for hot-end components of aviation and aerospace power systems. With the continuous development of the aviation and aerospace industries, the design requirements of core components are accordingly increased. A large number of complex internal flow channels and thin-walled structures are present inside the parts. The superalloys obtained by the traditional casting, forging and welding process can no longer meet the design requirements.

EP3269472A1 refers to a nickel-based superalloy for producing mechanical components, such as engine components, from material powders by means of additive manufacturing methods. The additive manufacturing method may comprise, while not being limited to, one of Selective Laser Melting, SLM, and Electron Beam Melting, EBM. This document discloses the commercially available Haynes 230 Ni-based alloy wich comprises 22 wt % of chromium, 14 wt % of tungsten, 5 wt % of cobalt, 3 wt % of iron, 2 wt % of molybdenum, 0.5 wt % of manganese, 0.4 wt % of silicon, 0.3 wt % of aluminium, 0.10 wt % of carbon, 0.02 wt % of lanthanum and 0.015 wt % of boron, and a balance of nominally 57 wt % of nickel. However, this document does not mention the morphology of the grain with respect to carbides or its improvements in terms of mechanical properties.

### Brief description of the invention

It is an object of the present disclosure to provide a nickel-based superalloy and a manufacturing method therefor. The alloy has no cracks on the surface and inside, has high strength at high temperatures and excellent performance even at a temperature of 1100°C, and can thus meet the use requirements of aviation and aerospace.

In a first aspect, the present disclosure provides a nickel-based superalloy prepared by 3D printing using the following raw material as claimed in claim 1.

The raw material includes the following composition by mass percentage: less than or equal to 0.3% of C, less than 5% of Co, 13-15% of W, 20-24% of Cr, 1-3% of Mo, 0.2-0.5% of Al, less than 0.1% of Ti, less than 3% of Fe, less than 0.015% of B, 0.001-0.004% of La, 0.01-0.2% of Mn, and 0.02-0.2% of Si, with a balance being Ni.

The nickel-based superalloy has no cracks. In the microstructure of the nickel-based superalloy, the average size of carbide is 150-200 nm, and the size distribution of the carbide is 50 nm-4 $\mu$m.

In one or more embodiments, the raw material includes the following composition by mass percentage: 0.05-0.3% of C, less than 5% of Co, 13-15% of W, 20-24% of Cr, 1-3% of Mo, 0.2-0.5% of Al, less than 0.1% of Ti, less than 3% of Fe, less than 0.015% of B, 0.001-0.004% of La, 0.01-0.1% of Mn, and 0.02-0.1% of Si, with a balance being Ni.

In one or more embodiments, the raw material includes the following composition by mass percentage: 0.08-0.25% of C, less than 5% of Co, 13-15% of W, 20-24% of Cr, 1-3% of Mo, 0.2-0.5% of Al, less than 0.1% of Ti, less than 3% of Fe, less than 0.015% of B, 0.001-0.004% of La, 0.01-0.06% of Mn, and 0.02-0.06% of Si, with a balance being Ni.

The carbide in the nickel-based superalloy includes primary carbides and secondary carbides;

the primary carbide has a size of 200 nm-4 $\mu$m and is located in a W and Mo element enriched region between dendrites and cellular crystals; and
the secondary carbide has a size of 50-150 nm and is located partially at the interface and partially inside the grain.

The 3D printing is the selective laser melting.

In one or more embodiments, the nickel-based superalloy is prepared by the following steps: firstly processing the raw material into powders with particle size of 15-75 $\mu$m, and then performing the selective laser melting.

In one or more embodiments, the selective laser melting is followed by hot isostatic pressing and heat treatment.

In one or more embodiments, the nickel-based superalloy has a yield strength greater than or equal to 50 MPa at 1100°C; and

in one or more embodiments, the obtained nickel-based superalloy before hot isostatic pressing has a density greater than or equal to 99%, and the nickel-based superalloy obtained after hot isostatic pressing has a density greater than or equal to 99.95%.

The process parameters in the selective laser melting process include:

(a) laser power: 100-700 W;
(b) laser scanning speed: 600-2000 mm/s;
(c) spot diameter: 40-110 $\mu$m;
(d) laser spacing: 80-120 $\mu$m; and
(e) powder thickness: 20-80 $\mu$m.

In a second aspect, the present disclosure provides a method for manufacturing a nickel-based superalloy, including the following step:
preparing the nickel-based superalloy by 3D printing using the raw material for the nickel-based superalloy as claimed in claim 7.

The 3D printing is the selective laser melting.

In one or more embodiments, the raw material is firstly processed into powders with particle size of 15-75 $\mu$m, and then the selective laser melting is performed to obtain the nickel-based superalloy.

In one or more embodiments, the method includes following steps: firstly processing the raw material into powders with particle size of 15-75 $\mu$m, and then performing the selective laser melting 3D printing, followed by performing hot isostatic pressing and heat treatment, to obtain the nickel-based superalloy.

The process parameters in the selective laser melting process include:

(a) laser power: 100-700 W;
(b) laser scanning speed: 600-2000 mm/s;
(c) spot diameter: 40-110 $\mu$m;
(d) laser spacing: 80-120 $\mu$m; and
(e) powder thickness: 20-80 $\mu$m.

In a third aspect, the present disclosure provides a component including the nickel-based superalloy described above or a nickel-based superalloy manufactured by the manufacturing method described above as claimed in claim 10.

The present disclosure provides an aviation or aerospace engine, an aircraft or a gas turbine, including the component described above.

Compared with the prior art, the present disclosure can achieve at least the following advantageous effects.

In the present disclosure, a nickel-based superalloy is prepared by 3D printing, selective laser melting method, using a material of specific elemental composition. The present disclosure can impart a special structure to the alloy, which thus provides dense and crack-free complex components that satisfies strength requirements in high temperature environments.

A material of specific elemental composition can significantly reduce its crack sensitivity in the process of 3D printing selective laser melting is applied, and even a material of a nickel alloy composition with a high carbon content can maintain a non-cracking state. The resulting alloy has no cracks on the surface and inside, has high strength at high temperatures and excellent performance even at a service temperature of 1100°C.

In addition, in one or more embodiments, the use of process parameters suitable for the alloy material allows the resulting alloy to have excellent high-temperature performance.

**Brief Description of Drawings**

FIG. 1 is a metallographic structure image of the superalloy sample in Example 1;
FIG. 2 is a microstructure image of the superalloy sample in Example 1; and
FIG. 3 is a metallographic structure image of the alloy sample in Comparative Example 3.

**Detailed Description of the Embodiments**

In order to make the objects, technical solutions and advantages of the examples of the present disclosure clearer, the technical solutions in the examples of the present disclosure will be described clearly and completely below with reference to the accompanying drawings for the examples of the present disclosure. Obviously, the described examples are some, but not all, examples of the present disclosure. Generally, the components in the examples of the disclosure, described and illustrated in the accompanying drawings herein, may be arranged and designed in a variety of different configurations within the scope defined by the present set of claims.

Mechanical parts made by traditional casting, forging and welding process can no longer meet the design requirements in the aviation and aerospace field. 3D printing technology is used in order to improve the performance of mechanical parts.

When 3D printing technology was used for high-performance superalloys, it is found that although there are many types of existing high-performance superalloys, they were all developed for traditional preparation processes. In order to ensure printability, the superalloy materials currently used in the field of 3D printing mainly include IN625, IN718, Hastelloy X, and the like. At present, three grades of superalloys, namely Hastelloy X (domestic grade GH3536), Inconel 625 (domestic grade GH3625) and Inconel 718 (domestic grade GH4169), have been researched and optimized, and relatively mature printing technology has been developed to print the combustion chamber and other components in an aviation or aerospace engine.

GH3230 alloy, a nickel-based wrought superalloy, involves a traditional process route including casting, forging, rolling, and the like. It can be used for a long period of time above 1000°C, superior to IN718, IN625, HastelloyX and the other alloys. GH3230 alloy has certain weldability as well, and thus is feasible to be used for 3D printing process.

The inventors found that the printed components of GH3230 alloy are prone to having crack defects under the special process conditions of 3D printing, especially when preparing complex structures.

The present disclosure is improved on the basis of the alloy composition of GH3230, so as to better adapt to the special process requirements of 3D printing, solve the technical problem of cracking, and ensure the usage performance at 1100°C.

In one aspect, the present disclosure provides a nickel-based superalloy prepared by 3D printing as claimed in claim 1 using the following raw material. The raw material includes the following composition by mass percentage: less than or equal to 0.3% of C, less than 5% of Co, 13-15% of W, 20-24% of Cr, 1-3% of Mo, 0.2-0.5% of Al, less than 0.1% of Ti, less than 3% of Fe, less than 0.015% of B, 0.001-0.004% of La, 0.01-0.2% of Mn, and 0.02-0.2% of Si, with a balance being Ni. The nickel-based superalloy has no cracks. In the microstructure of the nickel-based superalloy, the average size of carbide is 150-200 nm, and the size distribution of the carbide is 50 nm-4 μm.

The raw material includes: less than or equal to 0.3% of C (for example, 0.01%, 0.02%, 0.05%, 0.08%, 0.09%, 0.1%, 0.12%, 0.15%, 0.16%, 0.18%, 0.2%, 0.22%, 0.24%, 0.25%, 0.26%, 0.28%, or 0.3%, etc.), less than 5% of Co (for example, 0.01%, 0.1%, 1%, 2%, 3%, 4%, or 4.8%, etc.), 13-15% of W (for example, 13%, 13.5%, 14%, 14.5%, or 15%, etc.), 20-24% of Cr (for example, 20%, 21%, 22%, or 24%, etc.), 1-3% of Mo (for example, 1%, 2%, or 3%, etc.), 0.2-0.5% of Al (for example, 0.2%, 0.3%, 0.4%, or 0.5%, etc.), less than 0.1% of Ti (for example, 0.01%, 0.02%, 0.03%, 0.04%, 0.05%, 0.06%, 0.07%, 0.08%, or 0.09%, etc.), less than 3% of Fe (for example, 0.01%, 0.1%, 0.5%, 1%, 1.5%, 2%, 2.5%, or 2.9%, etc.), less than 0.015% of B (for example, 0.001%, 0.002%, 0.005%, 0.008%, 0.01%, or 0.014%, etc.), 0.001-0.004% of La (for example, 0.001%, 0.002%, 0.003%, or 0.004%, etc.), 0.01-0.2% of Mn (for example, 0.01%, 0.02%, 0.03%, 0.04%, 0.05%, 0.06%, 0.08%, 0.1%, 0.12%, 0.15%, 0.16%, 0.18%, or 0.2%, etc.), 0.02-0.2% of Si (for example, 0.02%, 0.05%, 0.06%, 0.08%, 0.1%, 0.12%, 0.15%, 0.16%, 0.18%, or 0.2%, etc.), and the balance of Ni.

It should be noted that the balance of Ni means that other optional ingredients (total elements in residual ingredients or impurities) may also be included in the raw material, in addition to the other ingredients than Ni mentioned above. That is, in the raw material, the sum of the mass percentages of Ni, other ingredients than Ni, and other optional ingredients is 100%.

Cr has a solid solution strengthening effect in a nickel-based superalloy, and forms an oxide layer on the metal surface at high temperatures to improve the oxidation resistance of the alloy. However, if the Cr content exceeds 24%, the precipitation of harmful secondary phases would be promoted, the cracking tendency would be increased, and high-temperature mechanical properties of the alloy would be affected. Therefore, in the nickel-based superalloy raw material of the present disclosure, the Cr content is controlled at 20-24%.

Al is capable of forming a dense oxide film to improve the oxidation resistance of a nickel-based superalloy. In the nickel-based superalloy raw material of the present disclosure, the Al content is controlled at 0.2-0.5%.

W has a solid solution strengthening effect in a nickel-based superalloy. However, the W content exceeding 15% would promote the formation of harmful TCP phase. Therefore, in the nickel-based superalloy raw material of the present disclosure, the W content is controlled at 13-15%.

C is capable of forming carbide in a nickel-based superalloy and has a strengthening effect at high temperatures. However, after the traditional casting and forging process, excessive C content would cause precipitation of carbide at the grain boundaries, leading to formation of a continuous carbide film, which is not conducive to the mechanical properties of the alloy. Therefore, the C content of the existing GH3230 alloy is controlled at 0.05-0.15%. However, due to the process characteristics of rapid solidification and rapid cooling in a 3D printing process, the carbide tends to form fine and dispersedly distributed substance, which serves as a strengthening phase to improve mechanical properties. Therefore, the upper limit of the C content in the nickel-based superalloy raw material of the present disclosure is increased from 0.15% to 0.3%.

Si is advantageous to improve the oxidation resistance of alloys. The Si content in the existing GH3230 alloy is 0.25-0.75%. However, in a 3D printing process, Si would significantly increase the cracking tendency, and thus the content of Si needs to be strictly limited. Therefore, the Si content in the nickel-based superalloy raw material of the present disclosure is controlled at 0.02-0.2%.

Mn is a deoxidizing element and can react with sulfur to form MnS, thus mitigating harmful effects of sulfur. The Mn content in the existing GH3230 alloy is 0.3-1%. However, Mn would increase the cracking tendency during the printing. Therefore, the Mn content in the nickel-based superalloy raw material of the present disclosure is controlled at 0.01-0.2%.

La element affects the composition and morphology of an oxide film of a nickel-based superalloy, and improves the oxidation resistance and high-temperature mechanical properties of a nickel-based superalloy. The La content in the existing GH3230 alloy is 0.005-0.05%. However, during the 3D printing process, La element may undergo segregation or form lanthanide, which increase the cracking tendency. Therefore, the La content in the nickel-based superalloy raw material of the present disclosure is controlled at 0.001-0.004%.

B is a grain boundary strengthening element, and an appropriate amount of B element can improve the grain boundary strength of a nickel-based superalloy. However, if the B content is higher than 0.015%, a large amount of boride is formed, which is not conducive to the mechanical properties of the alloy, and the resulting low-melting-point boride would also increase the cracking tendency during the printing. Therefore, the B content in the nickel-based superalloy raw material of the present disclosure is controlled to be less than 0.015%.

In some typical embodiments, the raw material includes the following composition by mass percentage: 0.05-0.3% of C, less than 5% of Co, 13-15% of W, 20-24% of Cr, 1-3% of Mo, 0.2-0.5% of Al, less than 0.1% of Ti, less than 3% of Fe, less than 0.015% of B, 0.001-0.004% of La, 0.01-0.1% of Mn, and 0.02-0.1% of Si, with a balance being Ni.

In some more typical embodiments, the raw material includes the following composition by mass percentage: 0.08-0.25% of C, less than 5% of Co, 13-15% of W, 20-24% of Cr, 1-3% of Mo, 0.2-0.5% of Al, less than 0.1% of Ti, less than 3% of Fe, less than 0.015% of B, 0.001-0.004% of La, 0.01-0.06% of Mn, and 0.02-0.06% of Si, with a balance being Ni.

The raw material is, for example, a powder.

The 3D printing is the selective laser melting.

Selective laser melting (SLM) process is a rapid 3D printing technology that can melt metal powder layer by layer, and finally achieve near net shape of metal parts with high density without abrasive tool. Selective laser melting technology has the characteristics of high forming efficiency and can prepare parts with a complex structure, and has become the most potential manufacturing technology for superalloy parts with a complex structure.

Specifically, the nickel-based superalloy is prepared by following steps: firstly processing the raw material described above into powders with the particle size of 15-75 $\mu$m, and then performing selective laser melting. In one or more embodiments, hot isostatic pressing and heat treatment are performed after selective laser melting to obtain a nickel-based superalloy.

In one or more embodiments, the process parameters in the selective laser melting process include:

    (a) a laser power of 100-700W, such as 100W, 200W, 300W, 400W, 500W, 600W, or 700W;
    (b) a laser scanning speed of 600-2000 mm/s, such as 600 mm/s, 700 mm/s, 800 mm/s, 900 mm/s, 1000 mm/s, 1200 mm/s, 1500 mm/s, 1800 mm/s, or 2000 mm/s;
    (c) a spot diameter of 40-110 $\mu$m, such as 40 $\mu$m, 50 $\mu$m, 60 $\mu$m, 70 $\mu$m, 80 $\mu$m, 90 $\mu$m, 100 $\mu$m, or 110 $\mu$m;
    (d) a laser spacing of 80-120 $\mu$m, such as 80 $\mu$m, 90 $\mu$m, 100 $\mu$m, 110 $\mu$m, or 120 $\mu$m; and
    (e) a powder thickness of 20-80 $\mu$m, such as 20 $\mu$m, 30 $\mu$m, 40 $\mu$m, 50 $\mu$m, 60 $\mu$m, 70 $\mu$m, or 80 $\mu$m.

The process parameters in SLM are selected to render the volumetric energy density $E_v$ of laser to range from 50-100 J/mm$^3$ during selective laser melting in the present disclosure. $E_v$ is calculated as follows:

$$E_v = \frac{P}{V \cdot H \cdot t}$$

where P is the laser power, V is the laser scanning speed, H is the laser spacing, and t is the powder thickness.

Through the interaction of the four process parameters, volumetric energy density $E_v$ of laser is kept within the range of 50-100 J/mm$^3$ during selective laser melting. If $E_v$ is out of this range, a large number of voids and defects would be formed inside the alloy, resulting degradation of alloy properties.

The raw material used in the nickel-based superalloy of the present disclosure is particularly suitable for selective laser melting by controlling the content of Si, Mn, and La in the composition, so that the crack sensitivity during the laser melting forming process of selected region is significantly reduced. In addition to significantly reduced crack sensitivity, owing to a high C content in the raw material, the resulting nickel-based superalloy has a high strength at high temperatures and excellent performance even at a service temperature of 1100°C.

In the present disclosure, through the interaction of the contents of individual ingredients, the printed alloy product can still be kept from cracking, although the nickel alloy composition has a high carbon content.

The nickel-based superalloy formed by 3D printing using the raw material composition described above has no cracks on the surface and inside, and the size of carbide therein is significantly smaller and distributed more dispersedly than those of as-cast and as-forged GH3230 alloy.

The average size of carbide is 150-200 nm (for example, 160, 170, 180, or 190 nm), the size distribution of carbide is 50 nm-4 $\mu$m (including, for example, 50-100 nm, 50-150 nm, 50-200 nm, 300 nm-4 $\mu$m, 300 nm-2 $\mu$m, 500 nm-2 $\mu$m, 200 nm-3 $\mu$m, or the like).

In one or more embodiments, as a typical microstructure in the nickel-based superalloy, the carbide includes primary carbides and secondary carbides.

The primary carbide has a size of 200 nm-4 $\mu$m (which may be, for example, 200 nm-1 $\mu$m, 200 nm-2 $\mu$m, 200 nm-3 $\mu$m, 300 nm-1 $\mu$m, 300 nm-2 $\mu$m, 300 nm-3 $\mu$m, 300 nm-4 $\mu$m, 400 nm-1 $\mu$m, 400 nm-2 $\mu$m, 400 nm-3 $\mu$m, 400 nm-4 $\mu$m, 500 nm-1 $\mu$m, 500 nm-2 $\mu$m, 500 nm-3 $\mu$m, and 500 nm-4 $\mu$m), and is located in a W and Mo element enriched region between dendrites and cellular crystals.

The secondary carbide has a size of 50-150 nm (which may be, for example, 50-100 nm, 60-120 nm, 70-130 nm, 80-140 nm, 90-150 nm, 100-150 nm), and is located partially at the interface and partially inside the grain.

The nickel-based superalloy of the present disclosure is proposed in response to the applicability and the existing cracking problem resulting from printing in the 3D printing process. The alloy raw material is optimized and improved on the basis of the original GH3230 alloy composition to achieve good weldability, and almost no cracking phenomenon occurs during selective laser melting, and high strength at high temperatures is achieved. In one or more embodiments, owing to the interactions of various process parameters and raw material ingredients in the printing process, an alloy product with high density, no cracks, and high strength in a high temperature environment is obtained.

Typically, the nickel-based superalloy of the present disclosure has a yield strength at a high temperature (1100°C) greater than or equal to 50 MPa (for example, 55 MPa, 56 MPa, 58 MPa, or 60 MPa).

The yield strength is determined according to the tensile testing for metallic materials (GBIT 228.1-2010).

Typically, the elongation after fracture of the nickel-based superalloy of the present disclosure at room temperature is greater than or equal to 16%.

The elongation after fracture is determined according to the tensile testing for metallic materials (GBIT 228.1-2010).

Typically, the density of the nickel-based superalloy obtained before hot isostatic pressing is greater than or equal to 99%, and the density of the nickel-based superalloy obtained after hot isostatic pressing is greater than or equal to 99.95%.

The density is determined according to GBIT 3850-2015 "Impermeable sintered metal materials and hardmetals - Determination of density".

In another aspect, the present disclosure provides a method as claimed in claim 7 for manufacturing a nickel-based superalloy, including following step: preparing the nickel-based superalloy by 3D printing using the raw material for the nickel-based superalloy described above.

The method disclosed in the present disclosure selects a material with a specific elemental composition, and provides a nickel-based superalloy through 3D printing. The proposed method provides a novel approach to obtain dense and crack-free alloy parts with excellent high-temperature performance.

The 3D printing is the selective laser melting.

In one or more embodiments, the raw material is firstly processed into powders with a particle size of 15-75 $\mu$m, and then the selective laser melting is performed to obtain the nickel-based superalloy.

In some embodiments, the method includes following steps: firstly processing the raw material into powders with a particle size of 15-75 $\mu$m, then performing the selective laser melting 3D printing, and then performing hot isostatic pressing to obtain a nickel-based superalloy having a density after hot isostatic pressing greater than 99.95%, followed by heat treatment to achieve the required mechanical properties.

The process parameters in the selective laser melting 3D printing process include:

（a) laser power: 100-700 W;
（b) laser scanning speed: 600-2000 mm/s;
（c) spot diameter: 40-110 $\mu$m;
（d) laser spacing: 80-120 $\mu$m; and
（e) powder thickness: 20-80 $\mu$m.

The description on the terms in the manufacturing method is consistent with the corresponding description on the nickel-based superalloy of the first aspect, and will not be repeated here.

The nickel-based superalloy obtained by the manufacturing method has the same structure, morphology and properties as the nickel-based superalloy of the first aspect. The size of the carbide in the nickel-based superalloy formed by selective laser melting is significantly smaller and has more dispersed distribution than those of the as-cast and as-forged GH3230 alloy. Application of the material with the specific elemental composition for the nickel-based superalloy of the present disclosure to the method of the present disclosure enables the manufactured parts to be less prone to cracking and have excellent performance.

In another aspect, the present disclosure provides a component as claimed in claim 10, which includes the nickel-based superalloy described above or a nickel-based superalloy manufactured by the manufacturing method described above.

Consequently, the component has no cracks on the surface and inside, has a high density, and has high strength at high temperatures, and can thus meet the use requirements of aviation and aerospace.

Typical but non-limiting examples of the component include an air-inlet, a flame tube, a heat shield, and the like of an engine.

The present disclosure provides an aviation or aerospace engine, an aircraft or a gas turbine, including the component described above.

It can be understood that the aviation or aerospace engine, the aircraft or the gas turbine have the same advantages as the nickel-based superalloy and the component of the present disclosure, which will not be repeated here.

Some embodiments of the present disclosure will be described in detail below with reference to the examples. The following examples and features of the examples may be combined with each other without conflict. The examples for which specific conditions are not indicated are carried out according to the conventional conditions or the conditions recommended by the manufacturers. The used reagents or instruments for which the manufacturers are not indicated are all conventional products that can be purchased from the market.

## Example 1

A nickel-based superalloy raw material for 3D printing included the following composition by mass percentage: 0.3% C, 22% Cr, 14% W, 2% Mo, 0.5% Fe, 0.4% Al, 0.01% Ti, 0.02% Si, 0.01% Mn, 0.01% B, 0.001% La, and the balance of Ni.

The nickel-based superalloy raw material for 3D printing described in Example 1 was processed into powders of 15-75 $\mu$m, and the powder was subjected to selective laser melting technology (SLM), with the printing process using a laser power of 240W, a laser scanning speed of 1000 mm/s, a spot diameter of 100 $\mu$m, a laser spacing of 90 $\mu$m, and a powder thickness of 30 $\mu$m, to prepare a superalloy sample.

The metallographic structure observation and density measurement of the obtained superalloy sample were carried out.

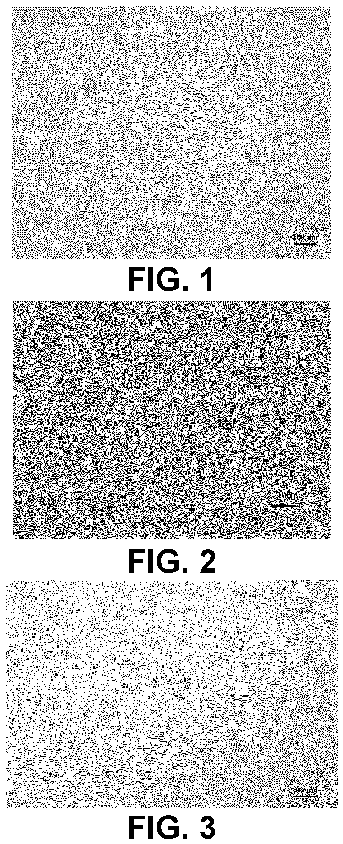

As shown in FIG. 1, the superalloy sample has a uniform, dense, and crack-free metallographic structure, and the density measurement result is 99.2%.

The microstructure of the superalloy sample is shown in FIG. 2. The grains are distributed in a long cellular shape along a deposition direction. A large number of carbide particles are precipitated at the grain boundaries (including cell boundaries), and fine carbide is evenly distributed inside the grains. The carbide in the superalloy sample mainly includes primary carbides in a large size (200 nm-4 $\mu$m), which is precipitated from the liquid phase during the solidification process, and mostly located in a region enriched with W, Mo and other elements between dendrites and cellular crystals. In addition, secondary carbides precipitated from the solid phase is relatively small (50-150 nm), and located partially at the interface and partially inside the grains.

The size of the carbide in the alloy formed by 3D printing is significantly smaller and has more dispersed distribution than those of an as-cast and as-forged alloy. The average size of carbide is 150-200 nm. The smallest one reaches tens of nm, and the largest one does not exceed 5 $\mu$m.

Generally, carbide has higher hardness than austenite matrix, and may reduce the interface bonding strength of the material and affect the mechanical properties of the alloy especially when it is continuously distributed at the interface. On the contrary, the small size carbide that is discontinuously distributed in this example exhibits a strengthening effect.

The 3D printed superalloy sample in this example and a cast alloy sample prepared by a casting process using the nickel-based superalloy raw material described above have tensile properties at room temperature (25 °C) and high temperatures as listed in Table 1 below.

The preparation method of the cast alloy sample involved casting using the composition of the above-mentioned nickel-based superalloy raw material for 3D printing. The method specifically included the following steps:

(1) high-purity elemental materials such as Co, Al, W, Ti, Ni, Fe, Cr, Mo, C, B, Mn, Si, and La were weighed according to the composition ratio;

(2) the elemental materials with a relatively low melting point, such as Co, Ni, and Cr, were placed at the bottom of a crucible, and the refractory elemental materials, such as W and Mo, were placed thereon, and Al, Ti, B, and the other elemental materials were placed in a hopper, so as to add them during the melting process; and

(3) melting was conducted in a vacuum induction furnace: heating was first conducted at a low power (about 120 kW) to eliminate the gas attached on the raw material, then the temperature was increased rapidly to above 1500°C by a high power (about 200 kW) and kept for 10 minutes, then the temperature was lowered to about 1300-1400°C and kept for 5 minutes, subsequently Al, Ti, B and the other elemental materials in the hopper were added, the temperature was increased to above 1500°C and kept for 15 minutes, and consequently the resultant was cast into a superalloy ingot.

Table 1

| | Yield strength $\sigma_b$ (MPa) | |
|---|---|---|
| | Cast alloy sample | 3D printed superalloy sample |
| Room temperature | 333 | 380 |
| 900°C | 166 | 218 |
| 1000°C | 85 | 117 |
| 1100°C | 57 | 75 |

As set forth in Table 1, the tensile properties of the cast alloy sample in this example and the 3D printed superalloy sample at room temperature and high temperatures are compared, the yield strength of the 3D printed superalloy sample at different temperatures was higher than that of the cast alloy sample.

**Examples 2-4**

The mass percentages of individual ingredients of the nickel-based superalloy raw material for 3D printing in Examples 2-4 are listed in Table 2, and the others are the same as in Example 1.

Table 2

| | C | Co | W | Cr | Mo | Al | Ti | Fe | B | La | Mn | Si | Ni |
|---|---|---|---|---|---|---|---|---|---|---|---|---|---|
| Example 2 | 0.0 8 | - | 13 | 20 | 1 | 0.2 | 0.1 | 3 | 0.015 | | | | balan ce |
| Example 3 | 0.3 | - | 15 | 24 | 3 | 0.5 | - | - | - | 0.004 | 0.2 | 0.2 | balan ce |
| Example 4 | 0.0 8 | - | 14 | 22 | 2 | 0.3 | 0.1 | 3 | 0.013 | 0.004 | 0.2 | 0.2 | balan ce |

**Comparative Examples 1-3**

The mass percentages of individual ingredients of the nickel-based superalloy raw material for 3D printing in Comparative Examples 1-3 are listed in Table 3, and the others are the same as in Example 1.

Table 3

| | C | C o | W | Cr | M o | Al | Ti | Fe | B | La | Mn | Si | Ni |
|---|---|---|---|---|---|---|---|---|---|---|---|---|---|
| Comparati ve Example 1 | 0.0 5 | - | 13 | 20 | 1 | 0.2 | 0.1 | 3 | 0.01 5 | 0.00 5 | 0.3 | 0.2 5 | balan ce |
| Comparati ve Example 2 | 0.3 | | 13 | 20 | 1 | 0.2 | 0.1 | 3 | 0.01 | 0.00 5 | 0.3 | 0.2 5 | balan ce |
| Comparati ve Example 3 | 0.1 5 | - | 13 | 22 | 1 | 0.5 | 0.0 5 | 2 | 0.01 | 0.05 | 1 | 0.7 5 | balan ce |

Each of the alloy raw materials of Examples 2-4 and Comparative Examples 1-3 was processed into powders of 15-75 µm, and the powder was subjected to selective laser melting technology (SLM) as in Example 1 to prepare the alloy sample. Here, the metallographic structure image of the alloy sample prepared from the alloy powder of Comparative Example 3 is shown in FIG. 3, showing that its metallographic structure has a large number of microcracks. The yield strength of each alloy sample at room temperature (25 °C) is shown in Table 4 below.

Table 4

|  | Yield strength $\sigma_b$(MPa) | Elongation after fracture (%) | Crack density (mm/mm$^2$) |
|---|---|---|---|
| Example 1 | 380 | 16 | No crack |
| Example 2 | 327 | 21 | No crack |
| Example 3 | 385 | 17 | No crack |
| Example 4 | 330 | 20 | No crack |
| Comparative Example 1 | 320 | 10 | 0.5 |
| Comparative Example 2 | 378 | 7 | 1.6 |
| Comparative Example 3 | 335 | 5 | 2.3 |

Finally, it should be noted that the above examples are used to illustrate the technical solutions of the present disclosure merely, but not to limit them. Although the present disclosure has been described in detail with reference to the foregoing examples, those of ordinary skill in the art should understand that the technical solutions described in the foregoing examples can be modified without departing from the scope defined by the present set of claims.

## Claims

1. A nickel-based superalloy, **characterized in that** the nickel-based superalloy is prepared by 3D printing using following raw materials;

   the raw materials comprise following composition by mass percentage: less than or equal to 0.3% of C, less than 5% of Co, 13-15% of W, 20-24% of Cr, 1-3% of Mo, 0.2-0.5% of Al, less than 0.1% of Ti, less than 3% of Fe, less than 0.015% of B, 0.001-0.004% of La, 0.01-0.2% of Mn, and 0.02-0.2% of Si, with a balance being Ni;
   the nickel-based superalloy has no cracks; in the microstructure of the nickel-based superalloy, an average size of carbide is 150-200 nm, and a size distribution of the carbide is 50 nm-4 $\mu$m;
   the carbide in the nickel-based superalloy comprises primary carbides and secondary carbides;
   the primary carbide has a size of 200 nm-4 $\mu$m and is located in a W and Mo elements enriched region between dendrites and cellular crystals; and
   the secondary carbide has a size of 50-150 nm and is located partially at an interface and partially inside a grain, wherein the 3D printing is the selective laser melting, and process parameters during the selective laser melting comprise:

   (a) laser power: 100-700 W;
   (b) laser scanning speed: 600-2000 mm/s;
   (c) spot diameter: 40-110 $\mu$m;
   (d) laser spacing: 80-120 $\mu$m; and
   (e) powder thickness: 20-80 $\mu$m.

2. The nickel-based superalloy according to claim 1, wherein the raw materials comprise following composition by mass percentage:
   0.05-0.3% of C, less than 5% of Co, 13-15% of W, 20-24% of Cr, 1-3% of Mo, 0.2-0.5% of Al, less than 0.1% of Ti, less than 3% of Fe, less than 0.015% of B, 0.001-0.004% of La, 0.01-0.1% of Mn, and 0.02-0.1% of Si, with a balance being Ni.

3. The nickel-based superalloy according to claim 1, wherein the raw materials comprise following composition by mass percentage:
   0.08-0.25% of C, less than 5% of Co, 13-15% of W, 20-24% of Cr, 1-3% of Mo, 0.2-0.5% of Al, less than 0.1% of Ti, less than 3% of Fe, less than 0.015% of B, 0.001-0.004% of La, 0.01-0.06% of Mn, and 0.02-0.06% of Si, with a balance being Ni.

4. The nickel-based superalloy according to claim 1, wherein the nickel-based superalloy is prepared by following steps: firstly processing the raw materials into powders with a particle size of 15-75 $\mu$m, and then performing the selective laser melting.

5. The nickel-based superalloy according to claim 4, wherein the selective laser melting is followed by hot isostatic pressing and heat treatment.

6. The nickel-based superalloy according to claim 5, wherein the nickel-based superalloy has a yield strength greater than or equal to 50 MPa at 1100°C; and
an obtained nickel-based superalloy before the hot isostatic pressing has a density greater than or equal to 99%, and the nickel-based superalloy obtained after the hot isostatic pressing has a density greater than or equal to 99.95%.

7. A method for manufacturing a nickel-based superalloy, **characterized by** comprising a step of:
preparing the nickel-based superalloy by 3D printing using the raw materials for the nickel-based superalloy according to any one of claims 1 to 3, wherein the 3D printing is the selective laser melting, and process parameters during the selective laser melting comprise:

(a) laser power: 100-700 W;
(b) laser scanning speed: 600-2000 mm/s;
(c) spot diameter: 40-110 $\mu$m;
(d) laser spacing: 80-120 $\mu$m; and
(e) powder thickness: 20-80 $\mu$m.

8. The manufacturing method according to claim 7, wherein the manufacturing method comprises following steps: firstly processing the raw materials into powders with a particle size of 15-75 $\mu$m, and then performing the selective laser melting to obtain the nickel-based superalloy.

9. The manufacturing method according to claim 8, wherein the manufacturing method comprises following steps: firstly processing the raw materials into powders with a particle size of 15-75 $\mu$m, and then performing the selective laser melting, followed by performing hot isostatic pressing and heat treatment, to obtain the nickel-based superalloy.

10. A component, **characterized by** comprising the nickel-based superalloy according to any one of claims 1 to 6 or a nickel-based superalloy manufactured by the manufacturing method according to any one of claims 7 to 9.

**Patentansprüche**

1. Superlegierung auf Nickelbasis, **dadurch gekennzeichnet,**

**dass** die Superlegierung auf Nickelbasis durch 3D-Drucken unter Verwendung folgender Rohstoffe hergestellt wird;
die Rohstoffe umfassen die folgende Zusammensetzung in Massenprozent: 0,3 % oder weniger C, 5 % oder weniger Co, 13-15 % W, 20-24 % Cr, 1-3 % Mo, 0,2- 0,5 % Al, weniger als 0,1 % Ti, weniger als 3 % Fe, weniger als 0,015 % B, 0,001-0,004 % La, 0,01-0,2 % Mn, und 0,02-0,2 % Si, wobei ein Rest Ni ist;
**dass** die Superlegierung auf Nickelbasis keine Risse aufweist; in der Mikrostruktur der Superlegierung auf Nickelbasis eine durchschnittliche Größe des Carbids 150-200 nm beträgt, und eine Größenverteilung des Carbids 50 nm-4 $\mu$m beträgt;
**dass** das Carbid in der Superlegierung auf Nickelbasis Primärcarbide und Sekundräcarbide umfasst;
**dass** das Primärcarbid eine Größe von 200 nm bis 4 $\mu$m aufweist und sich in einem mit W- und Mo-Elementen angereicherten Bereich zwischen Dendriten und zellulären Kristallen befindet; und
**dass** das Sekundärcarbid eine Größe von 50-150 nm aufweist und sich teilweise an einer Grenzfläche und teilweise innerhalb eines Korns befindet,
wobei es sich beim 3D-Drucken um selektives Laserschmelzen handelt und Verfahrensparameter beim selektiven Laserschmelzen umfassen:

(a) Laserleistung: 100-700 W;

(b) Laserscangeschwindigkeit: 600-2000 mm/s;
(c) Spotdurchmesser: 40-110 $\mu$m;
(d) Laserabstand: 80-120 $\mu$m; und
(e) Pulverdicke: 20-80 $\mu$m.

2. Superlegierung auf Nickelbasis nach Anspruch 1, wobei die Rohstoffe folgende Zusammensetzung in Massenprozent aufweisen:
0,05-0,3 % C, weniger als 5 % Co, 13-15 % W, 20-24 % Cr, 1-3 % Mo, 0,2-0,5 % Al, weniger als 0,1 % Ti, weniger als 3 % Fe, weniger als 0,015 % B, 0,001-0,004 % La, 0,01-0,1 % Mn, und 0,02-0,1 % Si, wobei ein Rest Ni ist.

3. Superlegierung auf Nickelbasis nach Anspruch 1, wobei die Rohstoffe folgende Zusammensetzung in Massenprozent aufweisen:
0,08-0,25 % C, weniger als 5 % Co, 13-15 % W, 20-24 % Cr, 1-3 % Mo, 0,2-0,5 % Al, weniger als 0,1 % Ti, weniger als 3 % Fe, weniger als 0,015 % B, 0,001-0,004 % La, 0,01-0,06 % Mn, und 0,02-0,06 % Si, wobei ein Rest Ni ist.

4. Superlegierung auf Nickelbasis nach Anspruch 1, wobei die Superlegierung auf Nickelbasis durch folgende Schritte hergestellt wird: zuerst werden die Rohmaterialien zu Pulvern mit einer Teilchengröße von 15-75 $\mu$m verarbeitet und dann wird das selektive Laserschmelzen durchgeführt.

5. Superlegierung auf Nickelbasis nach Anspruch 4, wobei das selektive Laserschmelzen von isostatischem Heißpressen und Wärmebehandlung gefolgt wird.

6. Superlegierung auf Nickelbasis nach Anspruch 5, wobei die Superlegierung auf Nickelbasis eine Streckgrenze von 50 MPa oder mehr bei 1100 °C aufweist; und
eine vor dem isostatischen Heißpressen erhaltene Superlegierung auf Nickelbasis eine Dichte von 99 % oder mehr aufweist und die nach dem isostatischen Heißpressen erhaltene Superlegierung auf Nickelbasis eine Dichte von 99,95 % oder mehr aufweist.

7. Verfahren zum Herstellen einer Superlegierung auf Nickelbasis, **gekennzeichnet dadurch, dass** es folgende Stufe aufweist:
Herstellen der Superlegierung auf Nickelbasis durch 3D-Drucken unter Verwendung der Rohstoffe für die Superlegierung auf Nickelbasis nach einem der Ansprüche 1 bis 3, wobei es sich beim 3D-Drucken um selektives Laserschmelzen handelt und Verfahrensparameter beim selektiven Laserschmelzen umfassen:

(a) Laserleistung: 100-700 W;
(b) Laserscangeschwindigkeit: 600-2000 mm/s;
(c) Spotdurchmesser: 40-110 $\mu$m;
(d) Laserabstand: 80-120 $\mu$m; und
(e) Pulverdicke: 20-80 $\mu$m.

8. Herstellungsverfahren nach Anspruch 7, wobei das Herstellungsverfahren folgende Schritte umfasst:
zunächst werden die Rohstoffe zu Pulvern mit einer Teilchengröße von 15-75 $\mu$m verarbeitet und anschließend wird das selektive Laserschmelzen durchgeführt, um die Superlegierung auf Nickelbasis zu erhalten.

9. Herstellungsverfahren nach Anspruch 8, wobei das Herstellungsverfahren folgende Schritte umfasst: zunächst werden die Rohstoffe zu Pulvern mit einer Teilchengröße von 15-75 $\mu$m verarbeitet und anschließend wird das selektive Laserschmelzen durchgeführt, woran sich Durchführen von isostatischem Heißpressen und Wärmebehandlung anschließen, um die Superlegierung auf Nickelbasis zu erhalten.

10. Komponente, **dadurch gekennzeichnet, dass** sie die Superlegierung auf Nickelbasis nach einem der Ansprüche 1 bis 6 oder eine nach dem Herstellungsverfahren nach einem der Ansprüche 7 bis 9 hergestellte Superlegierung auf Nickelbasis umfasst.

**Revendications**

1. Superalliage à base de nickel, **caractérisé en ce que** le superalliage à base de nickel est préparé par impression 3D en utilisant les matières premières suivantes ;

les matières premières comprennent la composition suivante en pourcentage en masse : moins de 0,3 % de C, moins de 5 % de Co, de 13 à 15 % de W, de 20 à 24 % de Cr, de 1 à 3 % de Mo, de 0,2 à 0,5 % d'Al, moins de 0,1 % de Ti, moins de 3 % de Fe, moins de 0,015 % de B, de 0,001 à 0,004 % de La, de 0,01 à 0,2 % de Mn et de 0,02 à 0,2 % de Si, le reste étant du Ni ;

le superalliage à base de nickel ne présente pas de fissures ; dans la microstructure du superalliage à base de nickel, une taille moyenne de carbure est de 150 à 200 nm, et une distribution de taille du carbure est de 50 nm à 4 $\mu$m ;

le carbure dans le superalliage à base de nickel comprend des carbures primaires et des carbures secondaires ;

le carbure primaire présente une taille de 200 nm à 4 $\mu$m et est situé dans une région enrichie en éléments W et Mo entre des dendrites et des cristaux cellulaires ; et

le carbure secondaire présente une taille de 50 à 150 nm et est situé partiellement à une interface et partiellement à l'intérieur d'un grain,

dans lequel l'impression 3D est la fusion sélective au laser, et les paramètres de processus pendant la fusion sélective au laser comprennent :

    (a) puissance de laser : de 100 à 700 W ;
    (b) vitesse de balayage de laser : de 600 à 2 000 mm/s ;
    (c) diamètre de point : de 40 à110 $\mu$m.
    (d) espacement de laser : de 80 à 120 $\mu$m ; et
    (e) épaisseur de poudre : de 20 à 80 $\mu$m.

2. Superalliage à base de nickel selon la revendication 1, dans lequel les matières premières comprennent la composition suivante en pourcentage en masse :
de 0,05 à 0,3 % de C, moins de 5 % de Co, de 13 à 15 % de W, de 20 à 24 % de Cr, de 1 à 3 % de Mo, de 0,2 à 0,5 % d'Al, moins de 0,1 % de Ti, moins de 3 % de Fe, moins de 0,015 % de B, de 0,001 à 0,004 % de La, de 0,01 à 0,1 % de Mn et de 0,02 à 0,1 % de Si, le reste étant du Ni.

3. Superalliage à base de nickel selon la revendication 1, dans lequel les matières premières comprennent la composition suivante en pourcentage en masse :
les matières premières comprennent la composition suivante en pourcentage en masse : de 0,08 à 0,25 % de C, moins de 5 % de Co, de 13 à 15 % de W, de 20 à 24 % de Cr, de 1 à 3 % de Mo, de 0,2 à 0,5 % d'Al, moins de 0,1 % de Ti, moins de 3 % de Fe, moins de 0,015 % de B, de 0,001 à 0,004 % de La, de 0,01 à 0,06 % de Mn et de 0,02 à 0,06 % de Si, le reste étant du Ni.

4. Superalliage à base de nickel selon la revendication 1, dans lequel le superalliage à base de nickel est préparé par les étapes suivantes : premièrement, transformer les matières premières en poudres avec une taille de particule de 15 à 75 $\mu$m, puis effectuer la fusion sélective au laser.

5. Superalliage à base de nickel selon la revendication 4, dans lequel la fusion sélective au laser est suivie d'une compression isostatique à chaud et d'un traitement thermique.

6. Superalliage à base de nickel selon la revendication 5, dans lequel le superalliage à base de nickel présente une limite d'élasticité supérieure ou égale à 50 MPa à 1 100 °C ; et
un superalliage à base de nickel obtenu avant la compression isostatique à chaud présente une densité supérieure ou égale à 99 %, et le superalliage à base de nickel obtenu après la compression isostatique à chaud présente une densité supérieure ou égale à 99,95 %.

7. Procédé de fabrication d'un superalliage à base de nickel, **caractérisé en ce qu'**il comprend une étape suivante consistant à :
préparer le superalliage à base de nickel par impression 3D en utilisant les matières premières pour le superalliage à base de nickel selon l'une quelconque des revendications 1 à 3, dans lequel l'impression 3D est la fusion sélective au laser, et les paramètres de processus pendant la fusion sélective au laser comprennent :

    (a) puissance de laser : de 100 à 700 W ;
    (b) vitesse de balayage de laser : de 600 à 2 000 mm/s ;
    (c) diamètre de point : de 40 à110 $\mu$m.
    (d) espacement de laser : de 80 à 120 $\mu$m ; et
    (e) épaisseur de poudre : de 20 à 80 $\mu$m.

8. Procédé de fabrication selon la revendication 7, dans lequel le procédé de fabrication comprend les étapes suivantes consistant à :
premièrement, transformer les matières premières en poudres d'une taille de particule de 15 à 75 $\mu$m, puis effectuer une fusion sélective au laser pour obtenir le superalliage à base de nickel.

9. Procédé de fabrication selon la revendication 8, dans lequel le procédé de fabrication comprend les étapes consistant à : premièrement, transformer les matières premières en poudres avec une taille de particule de 15 à 75 $\mu$m, puis effectuer une fusion sélective au laser, suivie d'une compression isostatique à chaud et d'un traitement thermique, pour obtenir le superalliage à base de nickel.

10. Composant, **caractérisé en ce qu'**il comprend le superalliage à base de nickel selon l'une quelconque des revendications 1 à 6 ou un superalliage à base de nickel fabriqué par le procédé de fabrication selon l'une quelconque des revendications 7 à 9.

FIG. 1

FIG. 2

FIG. 3

**EP 4 134 459 B1**

**REFERENCES CITED IN THE DESCRIPTION**

**Patent documents cited in the description**

- EP 3269472 A1